# FASCICULE DE BREVET EUROPEEN

(11) **EP 1 824 696 B1**
(45) Date de publication et mention de la délivrance du brevet: **18.01.2012**
(21) Numéro de dépôt: 05824441.9
(22) Date de dépôt: 09.12.2005
(51) Int. Cl.: B60J 1/02, B60J 1/06

(54) **VITRAGE COMPLEXE CONSTITUE D'AU MOINS DEUX ELEMENTS VITRES CONTIGUS ET PROCEDE DE REALISATION DE CE VITRAGE COMPLEXE.**
AUS MINDESTENS ZWEI BENACHBARTEN GLASELEMENTEN BESTEHENDES KOMPLEXES TRENNWANDGLAS UND VERFAHREN ZUR HERSTELLUNG DES KOMPLEXEN TRENNWANDGLASES
COMPLEX PARTITION GLASS CONSISTING OF AT LEAST TWO ADJACENT GLASS ELEMENTS, AND METHOD FOR PRODUCING SAID COMPLEX PARTITION GLASS

(30) Priorité: 14.12.2004 FR 0452983
(43) Date de publication de la demande: 29.08.2007
(73) Titulaire: SAINT-GOBAIN GLASS FRANCE, 92400 Courbevoie (FR)
(72) Inventeur: LECONTE, Jean-Gérard, F-92400 Courbevoie (FR); TOMBETTE, Yann, F-60200 Compiegne (FR)
(74) Mandataire: Jamet, Vincent
(86) Numéro de dépôt international: PCT/FR2005/051065
(87) Numéro de publication internationale: WO 2006/064153

(56) Documents cités:
- FR-A- 1 227 870
- FR-A- 2 373 432
- GB-A- 210 215
- US-A- 3 843 982
- US-A- 4 605 259
- US-A- 5 060 440
- US-A- 5 601 050
- US-A- 5 784 982

## Description

La présente invention se rapporte à un vitrage complexe constitué d'au moins deux éléments vitrés contigus selon au moins une portion de chant et séparés l'un de l'autre par un espace. Le document US5060440 décrit les preambules des revendications independantes.

Elle concerne également la fixation d'un tel vitrage complexe dans une baie et notamment une baie de carrosserie.

Il est connu dans l'art antérieur et notamment de la demande de brevet français N° FR 1 227 870, de réaliser des vitrages panoramiques latéralement en une seule pièce et notamment des pare-brise panoramiques latéralement présentant un bombage important selon un premier axe de courbure et un bombage très faible selon un second axe, sensiblement perpendiculaire au premier ; ce genre de vitrage est de type cylindrique ; ces vitrages ne comportent pratiquement aucune courbure en direction du toit du véhicule.

Actuellement, en raison des procédés de bombage utilisés dans l'industrie verrière, la faisabilité industrielle d'un vitrage présentant un double bombage, selon deux directions sensiblement perpendiculaires, fait l'objet d'une étude particulière avant le lancement de la fabrication.

En particulier, le bombage dans le sens vertical devient difficile à partir de 30 mm lorsque l'on utilise des procédés classiques de formage et quand le bombage dans l'autre sens (flèche) est significatif.

Avec les procédés de pressage, il est possible d'augmenter le bombage (au-delà de 30°) et surtout faire des formes quasi sphériques, mais plus le bombage est prononcé, plus le risque sur la qualité optique est élevé ; il est donc particulièrement délicat de mettre en oeuvre de tels procédés pour des fabrications à cadences élevées de vitrages devant répondre à des normes très strictes, comme par exemple les fabrications de vitrages automobiles.

Il est également connu dans l'art antérieur de réaliser des vitrages panoramiques latéralement et notamment des pare-brise panoramiques latéralement en associant un vitrage principal (pare-brise) à des vitrages secondaires (vitrages latéraux avants fixes) à l'aide de montants latéraux de carrosserie les plus fins possibles de manière à donner une vision panoramique.

Toutefois ces montants latéraux sont disgracieux et gênent la vision panoramique latérale.

Il est également connu dans l'art antérieur de réaliser des vitrages panoramiques longitudinalement et notamment des pare-brise panoramiques longitudinalement en associant un vitrage principal (pare-brise) à un vitrage secondaire (vitrage de toit fixe) à l'aide d'un montant longitudinal, ou traverse, de carrosserie. L'art antérieur connaît à ce titre la demande de brevet français N° FR 2 373 432.

Toutefois ce montant longitudinal est également disgracieux et gêne la vision panoramique en haut du pare-brise, entre le pare-brise et le toit transparent. De plus, ce montant transversal soutenant les deux vitrages au niveau de leur jonction est situé au niveau de la tête des passagers avant et de par sa largeur importante il absorbe beaucoup de lumière, si bien que le bénéfice en terme de luminosité pour l'intérieur de l'habitacle n'est pas aussi important que ce qui pourrait être espéré avec une surface vitrée aussi importante.

L'art antérieur connaît en outre du brevet américain N° US 5,784,982 un vitrage complexe constitué d'au moins deux éléments vitrés dont chaque élément vitré est muni d'un profilé rigide, ces profilés étant destinés à coopérer ensemble.

De même, ces profilés sont disgracieux et gênent la vision panoramique.

Pour obtenir toute la lumière souhaitée, permettre une impression d'espace augmenté à l'intérieur de l'habitacle, éviter la gêne procurée par les montants ou traverses, il apparaît ainsi souhaitable d'avoir un vitrage, notamment pare brise, ayant des retours, donc des cintrages prononcés sur plusieurs côtés à la fois, en particulier au moins trois cotés.

Par ailleurs, la réalisation d'un vitrage bombé pose de très grandes difficultés lorsque le bombage souhaité est important (notamment supérieur à 30 °) et surtout lorsque ce bombage est souhaité sur deux bords opposé.

En particulier pour respecter les normes automobiles en matière de qualité optique du vitrage, la forme panoramique latérale et la forme sphérique (panoramique latéralement et longitudinalement) amènent en principe à réduire la hauteur du pare brise et donc empêche le retour sur le toit ; ou à l'opposé, la forme panoramique longitudinale avec une remontée sur le toit n'est pas compatible avec des retours panoramiques latéraux.

Actuellement, il n'est ainsi pas possible de réaliser un vitrage qui soit bombé d'une manière important sur trois côtés ou bords et qui réponde aux exigences des normes automobiles en matière de qualité optique du vitrage.

Le but de l'invention est de pallier les inconvénients de l'art antérieur en proposant un vitrage complexe qui offre une très grande visibilité générale par sa face principale et ses côtés et/ou son toit.

Le vitrage complexe selon l'invention permet ainsi de réaliser un pare-brise panoramique latéralement et/ou longitudinalement sans montants de carrosserie respectivement latéraux et/ou longitudinaux.

La présente invention se rapporte ainsi dans son acception la plus large à un vitrage complexe selon la revendication 1.

Ce vitrage est constitué d'au moins deux éléments vitrés contigus selon au moins une portion de chant et séparés l'un de l'autre par un espace, un premier élément vitré étant muni sous un bord d'au moins une portion de profilé rigide faisant saillie au-delà dudit chant et réalisant un appui pour un second élément vitré.

Par « portion de chant » au sens de la présente invention, on entend une portion selon la longueur et/ou la hauteur du chant ; en effet, il est important que les vitrages soit contigus.

Par « élément vitré » au sens de la présente invention on entend tout vitrage monolithique minéral (notamment en verre) ou organique (en matière plastique) ou tout vitrage constitué de plusieurs feuilles minérales(s) et/ou organique(s) assemblées entre elles. Ces éléments vitrés peuvent être plats ou bombés y compris doublement bombés selon deux axes sensiblement perpendiculaires. Ces éléments vitrés sont au moins partiellement transparent et peuvent présenter des fonctions d'isolation thermique et/ou phonique et/ou des fonctions de transparence modulable thermiquement ou électriquement et/ou peuvent être chauffant et/ou peuvent porter des décors notamment émaillés et/ou des couches fonctionnelles ou décoratives.

Pour une application de l'invention dans le domaine automobile, chaque élément vitré correspond à la norme qui lui est applicable en fonction de sa position vis-à-vis du véhicule.

Il est important de comprendre ici qu'à l'intérieur d'un vitrage complexe selon l'invention les éléments vitrés peuvent être de différentes natures : le premier élément vitré peut par exemple être une plaque de verre monolithique par exemple bombée et trempée thermiquement et le second élément vitré peut par exemple être un vitrage feuilleté constitué de deux feuilles de verre par exemple bombées (y compris doublement bombées) assemblées entre elles par une feuille intercalaire en matière plastique, par exemple en polyvinylbutyral (PVB).

Il est aussi important de comprendre qu'il n'est pas nécessaire que le premier élément vitré et le second élément vitré présentent la même épaisseur.

Un espace entre les deux éléments vitrés contigus est nécessaire afin de permettre de compenser les éventuels écarts de dimension des éléments vitrés et les différentes orientations des chants adjacents des éléments vitrés.

Cet espace peut présenter en coupe transversale une forme triangulaire voire parallélépipédique, en fonction de la distance entre les chants des éléments vitrés contigus.

Les faces extérieures des éléments vitrés, celles qui sont à l'opposée de la face associée à la portion de profilé rigide, sont de préférence alignées selon la même courbure générale pour des raisons notamment d'esthétique et d'étanchéité, mais cela n'est pas indispensable.

Par ailleurs, dans le cas où un élément vitré n'est pas plat mais bombé le long du bord muni de la portion de profilé, cette portion de profilé est, de préférence, bombée selon sensiblement la même courbure que le bord dudit élément vitré, qu'il s'agisse d'un premier ou d'un second élément vitré.

Selon l'invention, la jonction transversale entre d'une part le premier élément vitré et d'autre part le second élément vitré est réalisée à l'aide d'une portion de profilé rigide unique. La rigidité ce profilé est telle que ce profilé n'est pas déformable manuellement.

Selon l'invention en outre, l'appui du second élément vitré sur le profilé rigide est tel qu'il permet une fixation d'une manière amovible du second élément vitré au profilé sans risque d'endommagement du premier élément vitré ou du profilé alors que la fixation du profilé au premier élément vitré est inamovible sans risque d'endommagement du premier élément vitré ou du profilé.

Le collage des éléments vitrés sur le profilé permet d'assurer l'étanchéité nécessaire des liaisons entre les différents constituants du vitrage complexe.

Lorsque la fixation du second élément vitré au profilé est amovible, le second élément vitré peut être remplacé s'il est endommagé sans qu'il soit nécessaire de remplacer le ou les autre(s) élément(s) vitré(s) ; par contre, si la fixation du second élément vitré au profilé est inamovible, lorsque le second élément vitré est endommagé, tout le vitrage complexe droit être remplacé.

Toutefois l'appui réalisé n'est pas forcément présent tout le long des bords contigus des éléments vitrés ; le profilé peut être partiellement ou complètement interrompu à une ou plusieurs reprise(s) le long des bords contigus des éléments vitrés.

Ledit profilé présente en coupe transversale sensiblement une forme de T ou une forme de Y ou une forme de h. Ce profilé peut toutefois présenter des faces non plates et notamment des faces libres (qui ne sont pas en contact avec des surfaces des éléments vitrés) courbées afin d'améliorer l'esthétisme du profilé.

Dans une variante du vitrage complexe selon l'invention les branches du T ou du Y sont positionnées ainsi, de préférence, sous les bords des éléments vitrés et le tronc du T ou du Y est positionné dans l'espace entre les éléments vitrés.

Une branche du T ou du Y peut être plus épaisse que l'autre, cette branche plus épaisse étant alors, de préférence, positionnée sous le bord dudit premier élément vitré.

Dans une autre variante du vitrage complexe selon l'invention les branches parallèles du h sont positionnées sous et sur les bords du premier élément vitré et le tronc du h est positionné sous le bord du second élément vitré.

Pour augmenter la transmission lumineuse aussi bien de l'intérieur que de l'extérieur, ledit profilé est, dans une version, au moins partiellement transparent. Dans cette version, il peut être, par exemple en matière plastique ou en verre. Il est possible de réaliser le profilé en une matière moins transparente que les éléments vitrés afin de conserver une certaine transmission lumineuse à travers tout en cachant au moins en partie les chants des éléments vitrés.

La matière plastique peut aussi être un matériau composite, à base de fibres de verre et de résine. Lorsque le profilé est en verre ou en matière plastique, il peut également être transparent, translucide, voire opaque.

Dans une autre version, ledit profilé est en métal ou en alliage métallique et est alors collé au premier élément vitré. Il présente alors une largeur et une épaisseur aussi faible que possible.

Lorsque le premier élément vitré est en matière plastique, voire en verre, il est possible de mouler directement le profilé lors du moulage du premier élément vitré.

Toutefois, lorsqu'il est en verre, on préférera plutôt coller le profilé au premier élément vitré, tout comme lorsque le profilé est en métal ou en alliage métallique.

Dans une variante de l'invention, la variante panoramique latéralement, ledit premier élément vitré est un élément au moins partiel de toit de véhicule et ledit second élément vitré est un pare-brise, notamment un pare-brise cintré latéralement et/ou longitudinalement.

Par « pare-brise cintré latéralement et/ou longitudinalement » on entend au sens de la présente invention un pare-brise à double bombage, tel que fabriqué avec les méthodes de bombage utilisées dans l'art antérieur.

Dans cette variante, ledit premier élément vitré est, de préférence, orienté au niveau du profilé selon un angle non plat avec ledit second élément vitré et de préférence même est orienté selon un angle inférieur à 170°, voire inférieur à 160°.

Dans une autre variante de l'invention, la version panoramique longitudinalement, ledit premier élément vitré est un élément au moins partiel de vitrage latéral de véhicule et ledit second élément vitré est un pare-brise, notamment un pare-brise cintré latéralement et/ou longitudinalement.

Dans cette variante, le vitrage complexe comporte, de préférence, au moins un second élément vitré constitué d'un pare-brise, notamment un pare-brise cintré latéralement et/ou longitudinalement, et deux premiers éléments vitrés constituant chacun un élément au moins partiel de vitrage latéral de véhicule, respectivement gauche et droite.

Dans une autre variante de l'invention, la variante panoramique latéralement et longitudinalement, le vitrage complexe comporte au moins un second élément vitré constitué d'un pare-brise, notamment un pare-brise cintré latéralement et/ou longitudinalement, deux premiers éléments vitrés constituant chacun un élément au moins partiel de vitrage latéral de véhicule et un premier élément vitré constituant un élément au moins partiel de toit de véhicule.

Dans la variante simplement panoramique latéralement ou dans la variante panoramique latéralement et longitudinalement ledit premier élément vitré est, de préférence, orienté au niveau du profilé selon un angle α, α' non plat avec ledit second élément vitré et de préférence est orienté selon un angle α, α' proche de 120°.

Par ailleurs, le vitrage complexe selon l'invention comporte, de préférence, un joint positionné entre le second élément vitré et ledit premier élément vitré, ce joint recouvrant au moins partiellement ledit profilé et pouvant être au moins partiellement transparent.

Le profilé rigide selon l'invention présente, de préférence, une largeur hors tout inférieure à 75 mm, voire inférieure à 50 mm, notamment de l'ordre de 40 à 45 mm, voire inférieure, par exemple de l'ordre de 30 mm. Cette largeur peut aussi être de l'ordre du double ou du triple de l'épaisseur d'un ou des éléments vitrés.

La présente invention se rapporte également à un premier élément vitré muni sur un bord d'au moins une portion de profilé rigide faisant saillie au-delà d'un chant de cet élément vitré pour un vitrage complexe selon l'invention.

Ce profilé présente dans une variante, de préférence, en coupe transversale sensiblement une forme de T ou de Y, une branche du T ou du Y étant positionnée sous le bord du premier élément vitré et le tronc du T ou du Y étant positionné adjacent au chant du premier élément vitré, de manière à ce qu'ainsi la branche libre du T ou du Y fasse saillie au-delà du chant du premier élément vitré et permette de réaliser une surface d'appui pour l'accueil d'un second élément vitré.

Dans une version de l'invention l'angle entre les branches du T est, non plat et de préférence inférieur à 170°, voire inférieur à 160°.

Dans une autre version de l'invention l'angle entre les branches du Y est non plat et de préférence proche de 120°.

Dans une autre variante, le profilé présente en coupe transversale sensiblement une forme de h, les branches parallèles du h étant positionnées sous et sur les bords de ce premier élément vitré.

La présente invention se rapporte également à un procédé de réalisation d'un vitrage complexe, ce vitrage étant constitué d'au moins deux éléments vitrés contigus selon au moins une portion de chant et séparés l'un de l'autre par un espace, caractérisé en ce que un premier élément vitré est muni sur un bord d'une portion de profilé rigide faisant saillie au-delà dudit chant et réalisant un appui pour un second élément vitré et en ce que l'on positionne ensuite le second élément vitré sur ledit profilé, c'est-à-dire en appui contre ce profilé.

Selon l'invention, un premier élément vitré est positionné avant le second élément vitré dans un gabarit de montage et/ou un premier élément vitré est positionné avant le second élément vitré dans une baie, notamment une baie de carrosserie.

Cette portion de profilé rigide est fabriquée de préférence préalablement par extrusion contre ledit premier élément vitré ou par encapsulation contre ledit premier élément vitré. Elle peut aussi être collée préalablement audit premier élément vitré par un cordon de colle.

Le second élément vitré est, de préférence, collé audit profilé par un cordon de colle.

Un joint est, en outre, de préférence, positionné entre le second élément vitré et ledit premier élément vitré, ce joint recouvrant au moins partiellement ledit profilé.

Avantageusement, la présente invention permet ainsi de réaliser des structures vitrées qui ne pourraient pas être réalisées en une seule pièce, en particulier des vitrages et notamment des vitrages automobiles qui ne pourraient pas être obtenus par les procédés actuels de bombage, tout au moins sans dégradation de la qualité optique.

Avantageusement également, la présente invention permet de réaliser des vitrages complexes qui présentent une résistance mécanique sensiblement aussi bonne que les vitrages complexes de l'art antérieur mais dont les jointures entre les éléments vitrés les composant sont moins visibles et engendrent moins de pertes de luminosité.

La présente invention est bien sûr applicable à la réalisation de vitrages pour des véhicules et notamment des véhicules automobiles, mais pas uniquement.

La variante panoramique latéralement de l'invention permet ainsi de réaliser un pare-brise éventuellement déjà bombé ou doublement bombé associé à des éléments vitrés latéraux qui reviennent vers les places avant du véhicule selon un angle qui est de préférence aigu mais qui peut être droit, voire même obtus, sans pour autant nécessiter la présence de montant de carrosserie latéraux.

La variante panoramique longitudinalement de l'invention permet ainsi de réaliser un pare-brise éventuellement déjà bombé ou doublement bombé dont l'élément vitré supérieur s'étend au moins en partie, voire complètement, sur le toit du véhicule, sans pour autant nécessiter la présence d'un montant de carrosserie transversal à la jonction entre l'élément vitré au moins partiel de toit et l'élément vitré de pare-brise proprement dit.

La variante panoramique latéralement et longitudinalement de l'invention permet ainsi de réaliser un pare-brise cumulant les avantages des deux précédentes variantes.

La présente invention sera mieux comprise à la lecture de la description détaillée ci-après d'exemples de réalisation non limitatifs et des figures ci-jointes :
- Les figures 1 à 3 illustrent chacune une coupe longitudinale verticale de la liaison entre un pare-brise et une portion de toit de véhicule pour un pare-brise panoramique longitudinalement réalisé selon une variante de l'invention ;
- La figure 4 illustre une vue de face d'un pare-brise panoramique latéralement réalisé selon l'invention ;
- La figure 5 illustre une coupe horizontale selon AA' de la figure 4 ; et
- La figure 6 illustre une vue de face d'un pare-brise panoramique latéralement et longitudinalement réalisé selon l'invention.

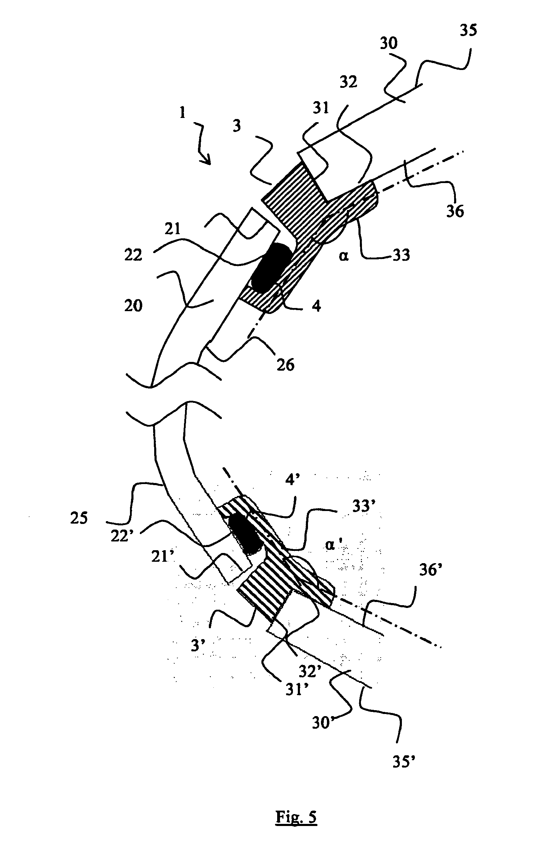

Il est précisé que les proportions entre les divers éléments représentés ne sont pas rigoureusement respectées dans ces figures afin d'en faciliter la lecture. En particulier sur la figure 5, l'espace entre les éléments vitrés ainsi que la courbure du second élément vitré ont été volontairement augmentés afin de faciliter la compréhension de l'invention.

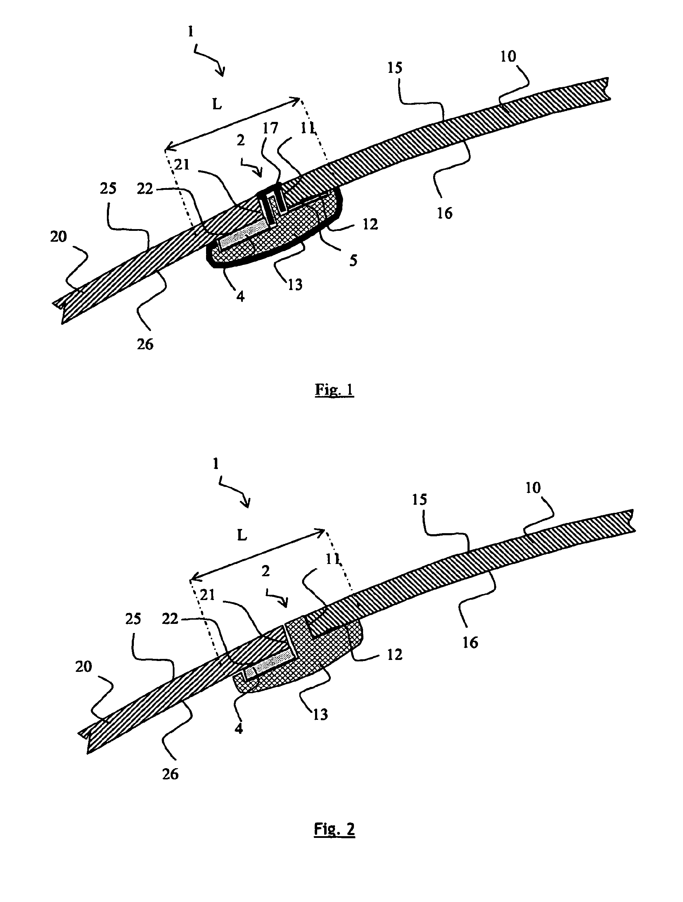

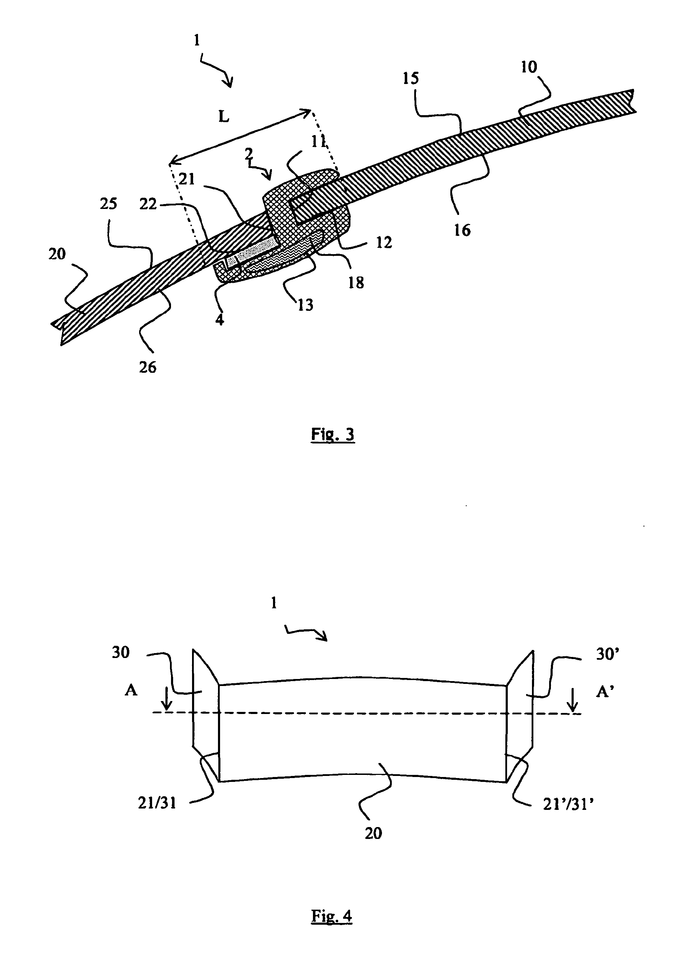

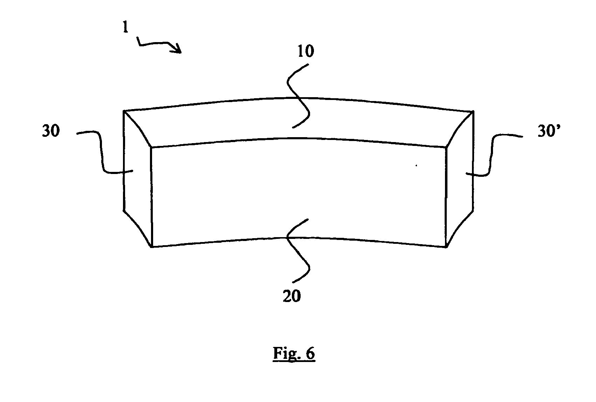

La présente invention repose sur la réalisation d'un vitrage complexe (1) constitué de deux éléments vitrés (10, 20) comme illustré par exemple sur les figures 1 à 3, ou de trois éléments vitrés (30, 30', 20), comme illustré par exemple sur la figure 4, ou encore de quatre éléments vitrés (10, 30, 30', 20), comme illustré par exemple sur la figure 6.

Dans les variantes illustrées sur les figures 1 à 3, ledit premier élément vitré (10) est un élément au moins partiel de toit de véhicule et ledit second élément vitré (20) est un pare-brise.

Dans ces variantes, le premier élément vitré (10) et le second élément vitré (20) sont contigus selon au moins respectivement une portion de chant (11, 21) et sont séparés l'un de l'autre par un espace (2), de l'ordre de quelques millimètres à une dizaine de millimètres, présentant en coupe une forme parallélépipédique.

Les éléments vitrés (10, 20) présentent la même épaisseur et sont disposés ici dans le vitrage complexe (1) de manière à ce que la face extérieure (25) du second élément vitré (20) soit dans la continuité de la face extérieure (15) du premier élément vitré (10) et que la face intérieure (26) du second élément vitré (20) soit dans la continuité de la face intérieure (16) du premier élément vitré (10).

Selon l'invention, le premier élément vitré (10) est muni sous un bord (12) d'au moins une portion de profilé rigide (13) faisant saillie au-delà dudit chant et réalisant un appui pour le second élément vitré (20) et plus précisément pour un bord (22) du second élément vitré (20).

Comme le second élément vitré (20) est dans la continuité du premier élément vitré (10), et que les courbures des éléments vitrés au niveau des bords (22, 12) sont très faibles, au niveau du profilé (13) le premier élément vitré (10) est orienté sensiblement selon un angle plat avec ledit second élément vitré (20), c'est-à-dire qu'au niveau des bords (22, 12), les plans moyens des éléments vitrés (20, 10) se confondent.

Dans la variante illustrée sur la figure 1, le profilé (13) est collé au premier élément vitré (10) à l'aide d'un filet de colle (5) forte très mince uniquement au niveau de la face intérieure (16) du premier élément vitré, mais il pourrait également être collé au niveau du chant (11).

Dans la variante illustrée sur la figure 2, le profilé (13) est extrudé contre de la face intérieure (16) et le chant (11) du premier élément vitré (10), sans utiliser de filet de colle, mais en préparant au préalable si nécessaire la surface du vitrage, comme habituellement pour l'extrusion d'une matière plastique sur un vitrage.

Dans ces deux variantes, le profilé (13) présente en coupe transversale sensiblement une forme de T, positionné ici à l'envers et plus précisément sens dessus dessous.

Lors de la fabrication du vitrage complexe, avant que le second élément vitré (20) ne prenne appui sur le premier élément vitré (10), le profilé (13) est positionné contigu au chant (11) de manière à ce qu'ensuite le tronc du T soit positionné dans l'espace (2), c'est-à-dire entre les éléments vitrés (10, 20) et une branche du T est positionnée sous le bord (12) du premier élément vitré (10) et plus précisément ici sous le bord intérieur du chant (11), en s'étendant contre la face intérieure (16) de l'élément vitré (10).

Lorsque le vitrage complexe (1) est fabriqué, le bord (22) du second élément vitré (20) est alors positionné sur la seconde branche du T et la seconde branche du T est alors située sous le bord inférieur du chant (21), à une distance de quelques millimètres de la face intérieure (26) du second élément vitré (20).

Cette distance entre la seconde branche du T et la face intérieure (26) permet le positionnement d'un cordon de colle (4) pour le collage du second élément vitré (20) au profilé (13) et ainsi par conséquent au premier élément vitré (10) lors de l'assemblage des deux éléments vitrés afin de former le vitrage complexe selon l'invention. L'extrémité libre de cette deuxième branche peut en outre être légèrement recourbée vers le second élément vitré afin de faciliter le positionnement du cordon de colle (4).

Dans les variantes illustrées aux figures 1 et 2, une branche du T est plus épaisse que l'autre : il s'agit de la première branche du T, celle positionnée sous le bord (12) du premier élément vitré (10). Cette épaisseur permet d'une part de compenser la distance entre la seconde branche du T et la face intérieure (26) permettant le positionnement d'un cordon de colle (4) et d'autre part de renforcer la première branche du T.

Dans la variante illustrée sur la figure 1, le profilé (13) est en acier et est recouvert d'une matière plastique réalisée par exemple par surmoulage, coextrusion, ...

Dans la variante illustrée sur la figure 2, le profilé (13) est en une matière plastique qui peut être mise en oeuvre par extrusion, comme par exemple des élastomères thermoplastiques (TPE) ou des oléfines thermoplastiques (TPO), ...

Dans la variante illustrée sur la figure 3, le profilé (13) est en une matière plastique qui peut être mise en oeuvre par encapsulation, comme par exemple un thermoplastique, un PU-RIM (polyuréthanne réagissant dans le moule) ou un EPDM, ...

Dans cette variante, le profilé (13) présente en coupe transversale sensiblement une forme de h, positionné ici allongé le long de son tronc.

Les branches parallèles du h sont positionnées sous et sur les bords du premier élément vitré (10), de manière à enchâsser l'ensemble du bord du vitrage, c'est-à-dire de manière à être en contact tant avec le bord intérieur, que le chant et le bord extérieur du premier élément vitré.

Un élément de renfort (18) peut être prévu à l'intérieur du profilé encapsulé pour en augmenter la rigidité.

Le bord (22) intérieur du second élément vitré (20) est ainsi positionné sur le tronc libre du h.

Dans toutes ces variantes, une pression exceptionnelle sur le vitrage ne produit pas de déformation plastique du profilé (par opposition à déformation élastique, revenant à sa position initiale après interruption de l'effort).

Le profilé (13) présente une largeur hors tout L de l'ordre de 40 à 45 mm.

Dans la variante illustrée figure 1, ce profilé (13) est recouvert d'un joint (17) fabriqué par moulage, extrusion ou tout simplement rapporté par assemblage. Ce joint (17) vient combler les espaces résiduels entre les portions de chant (11, 21), voire entre les faces du profilé et portions de chant adjacentes.

La variante illustrée figure 1 peut être fabriquée de différentes manières :
- soit en positionnant le premier élément vitré (10) munis du profilé (13) dans un gabarit de fixation du second élément vitré (20) et en procédant ensuite au positionnement du second élément vitré (20) dans le gabarit puis à la fixation du second élément vitré (20) au profilé (13) dans le gabarit, afin d'obtenir un vitrage complexe (1) qui puisse intégralement être positionné dans la baie de carrosserie en une seule opération de positionnement ;
- soit en positionnant et fixant le premier élément vitré (10) munis du profilé (13) dans la baie de la carrosserie et en procédant ensuite au positionnement du second élément vitré (20) dans la baie de carrosserie puis en procédant à la fixation du second élément vitré (20) au profilé (13) et à la carrosserie, afin d'obtenir un vitrage complexe (1) qui remplisse entièrement la baie de carrosserie.

Dans la variante illustrée figure 4, deux éléments vitrés (30, 30') sont contigus selon respectivement une portion de chant (31, 31') à un autre élément vitré (20) selon respectivement ses portions de chant (21, 21').

Dans cette variante, lesdits premiers éléments vitrés (30, 30') constituent chacun un élément de vitrage latéral avant de véhicule et ledit second élément vitré (20) est un pare-brise doublement bombé.

Les deux éléments vitrés (30, 30') sont, bien sûr, de préférence identiques et sont situés de part et d'autre du pare-brise (20) et constituent chacun respectivement un vitrage latéral avant respectivement droit et gauche par rapport au sens d'avancé du véhicule. Ces éléments vitrés (30, 30') sont disposés de manière symétrique par rapport un axe central du pare-brise et sont destinés, bien sûr, à être disposés symétriquement pour fermer une baie d'un véhicule. Les éléments vitrés (30, 30') présente ici une hauteur sensiblement identique à celle du pare-brise.

Sur la figure 5 on voit que, le premier élément vitré (30) et le second élément vitré (20) sont contigus selon respectivement une portion de chant (31, 21) et sont séparés l'un de l'autre par un espace (3), parallélépipédique en coupe, large de quelques millimètres et le premier élément vitré (30') et le second élément vitré (20) sont contigus selon respectivement une portion de chant (31', 21') et sont séparés l'un de l'autre par un espace (3') également parallélépipédique en coupe et large de quelques millimètres.

Les éléments vitrés (30, 30') présentent tous les deux la même épaisseur et sont tous les deux plus épais que le second élément vitré (20).

On voit également sur la figure 5 que dans le vitrage complexe (1) la face extérieure (25) du second élément vitré (20) n'est pas exactement dans la continuité des faces extérieures (35, 35') des premiers éléments vitrés (30, 30') et que la face intérieure (26) du second élément vitré (20) n'est pas exactement dans la continuité des faces intérieures (36, 36') des premiers éléments vitrés (30, 30').

Selon l'invention, les deux premiers éléments vitrés (30, 30') sont munis chacun sous un bord (32, 32') d'au moins une portion de profilé rigide (33, 33') faisant saillie au-delà du chant de l'élément vitré et réalisant un appui pour le second élément vitré (20), comme on peut le voir sur la figure 3.

Les profilés (33, 33') permettent également de rattraper les tolérances de fabrication des éléments vitrés.

Ces profilés (33, 33') ont été réalisés par encapsulation d'une matière plastique contre le chant (31, 31') et le bord (32, 32') intérieure des premiers éléments vitrés (30, 30').

Chacun des profilés (33, 33') présente en coupe transversale sensiblement une forme de Y. Ces profilés sont identiques mais sont positionnés symétriquement par rapport au plan de symétrie longitudinal du pare-brise (20) et du véhicule une fois le vitrage complexe installé dans la baie de carrosserie.

Le tronc du Y est positionné dans l'espace (3, 3') et une première branche du Y est positionnée sous le bord (32, 32') du premier élément vitré (30, 30') et plus précisément ici sous le bord intérieur du chant (31, 31'), en s'étendant contre la face intérieure (36, 36') de l'élément vitré (30, 30').

La deuxième branche du Y est positionnée sous le bord du second élément vitré (20) et plus précisément sous le bord intérieur respectivement des chants (21, 21') de l'élément vitré (20).

Dans cette variante, la coopération entre les profilés et les éléments vitrés est identique à celle décrite précédemment, à ceci près que l'extrémité libre des deuxièmes branches du Y est fortement recourbée vers le second élément vitré afin de constituer une butée pour l'appui du second élément vitré.

En particulier le second élément vitré (20) est collé aux profilés (30, 30') respectivement à l'aide d'un cordon de colle (4, 4').

Au niveau de chaque profilé (33, 33') le premier élément vitré (30, 30') est orienté selon un angle α, α' non plat avec ledit second élément vitré (20), l'angle α, α' étant ici proche de 120°.

La variante illustrée figures 4 et 5 peut être fabriquée de différentes manières :
- soit en positionnant les premiers éléments vitrés (30, 30') munis respectivement des profilés (33, 33') dans un gabarit de fixation du second élément vitré (20) et en procédant ensuite au positionnement du second élément vitré (20) dans le gabarit puis à la fixation du second élément vitré (20) aux profilés (33, 33') dans le gabarit, afin d'obtenir un vitrage complexe (1) qui puisse intégralement être positionné dans la baie de carrosserie en une seule opération de positionnement ;
- soit en positionnant et fixant les premiers éléments vitrés (30, 30') munis respectivement des profilés (33, 33') dans la baie de la carrosserie et en procédant ensuite au positionnement du second élément vitré (20) dans la baie de carrosserie, puis en procédant à la fixation du second élément vitré (20) aux profilés (33, 33') et à la carrosserie, afin d'obtenir un vitrage complexe (1) qui remplisse entièrement la baie de carrosserie.

La variante illustrée figure 6 correspond à une réalisation cumulant les variantes présentées respectivement aux figures 1 et 4.

Sur cette figure 6, les deux éléments vitrés latéraux avant (30, 30') sont contigus à la fois au pare-brise (20) et l'élément vitré au moins partiel de toit (10). Les vitrés (10, 20) sont séparés l'un de l'autre par un espace (2), comme illustré figure 1. Les éléments vitrés (30, 20) sont séparés l'un de l'autre par un espace (3) et les éléments vitrés (30', 20) sont séparés l'un de l'autre par un espace (3'), comme illustré figure 3.

Dans cette variante les liaisons entre les éléments vitrés latéraux avant (30, 30') et l'élément vitré au moins partiel de toit (10) sont également des liaisons selon l'invention, cela n'est toutefois pas strictement indispensable et il est possible de prévoir un montant traditionnel de carrosserie entre les éléments vitrés latéraux avant (30, 30') et l'élément vitré au moins partiel de toit (10).

La variante illustrée figure 6 est fabriquée en cumulant également les méthodes de fabrication des précédentes variantes. Comme pour ces précédentes variantes, il est possible de choisir entre la réalisation complète du vitrage complexe dans un gabarit puis le positionnement de ce vitrage dans la baie ou la fixation des premiers éléments vitrés dans la baie puis la fixation du second élément vitré dans la baie.

Il est également possible de réaliser une fixation mixte, c'est-à-dire de fixer un ou plusieurs premier(s) élément(s) vitré(s) au second élément vitré dans un gabarit, et de fixer par ailleurs un ou plusieurs premier(s) élément(s) vitré(s) dans la baie avant la fixation du second élément vitré dans la baie.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage complexe (1) constitué d'au moins deux éléments vitrés (10, 30, 30' ; 20) contigus selon au moins une portion de chant (11, 31, 31' ; 21) et séparés l'un de l'autre par un espace (2, 3, 3'), **caractérisé en ce qu'**un premier élément vitré (10, 30, 30') est muni par extrusion, par encapsulation ou par collage sous un bord (12, 32, 32') d'au moins une portion de profilé rigide (13, 33, 33') faisant saillie au-delà dudit chant et réalisant un appui pour un second élément vitré (20) collé audit profilé (13, 33, 33') par un cordon de colle (4, 4') et **en ce que** ledit profilé (13, 33, 33') présente en coupe transversale sensiblement une forme de T ou de Y ou de h.

2. Vitrage complexe (1) selon la revendication 1, **caractérisé en ce que** les branches du T ou du Y sont positionnées sous les bords (12, 22, 32, 32') des éléments vitrés (10, 20, 30, 30') et le tronc du T ou du Y est positionné dans l'espace (2, 3, 3').

3. Vitrage complexe (1) selon la revendication 1 ou la revendication 2, **caractérisé en ce qu'**une branche du T ou du Y est plus épaisse que l'autre, cette branche étant positionnée sous le bord (12, 32, 32') dudit premier élément vitré (10, 30, 30').

4. Vitrage complexe (1) selon la revendication 1, **caractérisé en ce que** les branches parallèles du h sont positionnées sous et sur les bords du premier élément vitré (10, 30, 30') et le tronc du h est positionné sous le bord (22) du second élément vitré (20).

5. Vitrage complexe (1) selon l'une quelconque des revendications précédentes, **caractérisé en ce que** ledit profilé (13, 33, 33') est au moins partiellement transparent.

6. Vitrage complexe (1) selon l'une quelconque des revendications précédentes, **caractérisé en ce que** ledit profilé (13, 33, 33') est en matière plastique ou en verre.

7. Vitrage complexe (1) selon l'une quelconque des revendications 1 à 4, **caractérisé en ce que** ledit profilé (13, 33, 33') est en métal ou en alliage métallique.

8. Vitrage complexe (1) selon l'une quelconque des revendications précédentes, **caractérisé en ce que** ledit premier élément vitré (10) est un élément au moins partiel de toit de véhicule et ledit second élément vitré (20) est un pare-brise, notamment un pare-brise cintré latéralement et/ou longitudinalement.

9. Vitrage complexe (1) selon la revendication précédente, **caractérisé en ce que** ledit premier élément vitré (10) est orienté au niveau du profilé (13) selon un angle non plat avec ledit second élément vitré (20) et de préférence est orienté selon un angle inférieur à 170°, voire inférieur à 160°.

10. Vitrage complexe (1) selon l'une quelconque des revendications 1 à 7, **caractérisé en ce que** ledit premier élément vitré (30, 30') est un élément au moins partiel de vitrage latéral de véhicule et ledit second élément vitré (20) est un pare-brise, notamment un pare-brise cintré latéralement et/ou longitudinalement.

11. Vitrage complexe (1) selon la revendication précédente, **caractérisé en ce qu'**il comporte au moins un second élément vitré (20) constitué d'un pare-brise, notamment un pare-brise cintré latéralement et/ou longitudinalement, et deux premiers éléments vitrés (30, 30') constituant chacun un élément au moins partiel de vitrage latéral de véhicule.

12. Vitrage complexe (1) selon la revendication précédente, **caractérisé en ce qu'**il comporte au moins un second élément vitré (20) constitué d'un pare-brise, notamment un pare-brise cintré latéralement et/ou longitudinalement, deux premiers éléments vitrés (30, 30') constituant chacun un élément au moins partiel de vitrage latéral de véhicule et un premier élément vitré (10) constituant un élément au moins partiel de toit de véhicule.

13. Vitrage complexe (1) selon l'une quelconque des revendications 10 à 12, **caractérisé en ce que** ledit premier élément vitré (30, 30') est orienté au niveau du profilé (33, 33') selon un angle α, α' non plat avec ledit second élément vitré (20) et de préférence est orienté selon un angle α, α' proche de 120°.

14. Vitrage complexe (1) selon l'une quelconque des revendications précédentes, **caractérisé en ce qu'**il comporte un joint (17) positionné entre le second élément vitré (20) et ledit premier élément vitré (10, 30, 30'), ce joint recouvrant au moins partiellement ledit profilé (13, 33, 33').

15. Vitrage complexe (1) selon l'une quelconque des revendications précédentes, **caractérisé en ce que** ledit profilé rigide (13, 33, 33') présente une largeur hors tout L inférieure à 75 mm, voire inférieure à 50 mm, notamment de l'ordre de 40 à 45 mm, voire inférieure, par exemple de l'ordre de 30 mm.

16. Premier élément vitré (10, 30, 30') muni par extrusion, par encapsulation ou par collage sur un bord (12, 32, 32') d'au moins une portion de profilé rigide (13, 33, 33') faisant saillie au-delà d'un chant (11, 31, 31') pour un vitrage complexe (1) selon l'une quelconque des revendications précédentes.

17. Premier élément vitré (10, 30, 33') selon la revendication précédente, **caractérisé en ce que** ledit profilé (13, 33, 33') présente en coupe transversale sensiblement une forme de T ou de Y, une branche du T ou du Y étant positionnée sous le bord (12, 32, 32') de ce premier élément vitré (10, 30, 33') et le tronc du T ou du Y étant positionné adjacent au chant (11, 31, 31') de ce premier élément vitré.

18. Premier élément vitré (10) selon la revendication précédente, **caractérisé en ce que** l'angle entre les branches du T est non plat et de préférence inférieur à 170°, voire inférieur à 160°.

19. Premier élément vitré (30, 30') selon la revendications 16, **caractérisé en ce que** l'angle entre les branches du Y est non plat et de préférence proche de 120°.

20. Premier élément vitré (10, 30, 33') selon la revendication 16, **caractérisé en ce que** ledit profilé (13, 33, 33') présente en coupe transversale sensiblement une forme de h, les branches parallèles du h étant positionnées sous et sur les bords de ce premier élément vitré (10, 30, 30').

21. Procédé de réalisation d'un vitrage complexe (1), ce vitrage étant constitué d'au moins deux éléments vitrés (10, 30, 30' ; 20) contigus selon au moins une portion de chant (11, 31, 31' ; 21) et séparés l'un de l'autre par un espace (2, 3, 3'), **caractérisé en ce qu'**un premier élément vitré (10, 30, 30') est muni sur un bord (12, 32, 32') d'une portion de profilé rigide (13, 33, 33') faisant saillie au-delà dudit chant et réalisant un appui pour un second élément vitré (20), ledit profilé (13, 33, 33') présente en coupe transversale sensiblement une forme de T ou de Y ou de h et **en ce que** l'on positionne ensuite le second élément vitré (20) sur ledit profilé (13, 33, 33').

22. Procédé selon la revendication précédente, **caractérisé en ce qu'**un premier élément vitré (10, 30, 30') est positionné avant le second élément vitré (20) dans un gabarit de montage.

23. Procédé selon la revendication 21 ou 22, **caractérisé en ce qu'**un premier élément vitré (10, 30, 30') est positionné avant le second élément vitré (20) dans une baie, notamment une baie de carrosserie.

24. Procédé selon l'une quelconque des revendications 21 à 23, **caractérisé en ce que** le second élément vitré (20) est collé audit profilé (13, 33, 33') par un cordon de colle (4, 4').

25. Procédé selon l'une quelconque des revendications 21 à 23, **caractérisé en ce que** ladite portion de profilé rigide (13, 33, 33') est fabriquée préalablement par extrusion contre ledit premier élément vitré (10, 30, 30').

26. Procédé selon l'une quelconque des revendications 21 à 23, **caractérisé en ce que** ladite portion de profilé rigide (13, 33, 33') est fabriquée préalablement par encapsulation contre ledit premier élément vitré (10, 30, 30').

27. Procédé selon l'une quelconque des revendications 21 à 23, **caractérisé en ce que** ladite portion de profilé rigide (13, 33, 33') est fabriquée préalablement et collée préalablement audit premier élément vitré (10, 30, 30') par un cordon de colle (5).

## Claims

1. A complex glazing (1) comprising at least two glazed elements (10, 30, 30'; 20) contiguous along at least a portion of edge (11, 31, 31'; 21) and spaced from each other by a space (2, 3, 3'), **characterized in that** a first glazed element (10, 30, 30') is provided by extrusion, by encapsulation or by gluing under a side (12, 32, 32') with at least a portion of rigid profile (13, 33, 33') protruding beyond said edge and forming a support for a second glazed element (20) glued to said profile (13, 33, 33') by a strip of glue (4, 4') and **in that** said profile (13, 33, 33') substantially has the shape of a T or of a Y or of an h in cross section.

2. The complex glazing (1) as claimed in claim 1, **characterized in that** the branches of the T or of the Y are positioned under the sides (12, 22, 32, 32') of the glazed elements (10, 20, 30, 30') and the stem of the T or of the Y is positioned in the space (2, 3, 3').

3. The complex glazing (1) as claimed in claim 1 or claim 2, **characterized in that** one branch of the T or of the Y is thicker than the other, this branch being positioned under the side (12, 32, 32') of said first glazed element (10, 30, 30').

4. The complex glazing (1) as claimed in claim 1, **characterized in that** the parallel branches of the h are positioned under and over the sides of the first glazed element (10, 30, 30') and the stem of the h is positioned under the side (22) of the second glazed element (20).

5. The complex glazing (1) as claimed in any one of the preceding claims, **characterized in that** said profile (13, 33, 33') is at least partially transparent.

6. The complex glazing (1) as claimed in any one of the preceding claims, **characterized in that** said profile (13, 33, 33') is made of plastic or of glass.

7. The complex glazing (1) as claimed in any one of claims 1 to 4, **characterized in that** said profile (13, 33, 33') is made of metal or of metal alloy.

8. The complex glazing (1) as claimed in any one of the preceding claims, **characterized in that** said first glazed element (10) is an at least partial roof element and said second glazed element (20) is a windscreen, in particular a laterally and/or longitudinally curved windscreen.

9. The complex glazing (1) as claimed in the preceding claim, **characterized in that** said first glazed element (10) is oriented, in the vicinity of the profile (13), at an angle that is not flat with said second glazed element (20) and preferably is oriented at an angle of less than 170°, or even less than 160°.

10. The complex glazing (1) as claimed in any one of claims 1 to 7, **characterized in that** said first glazed element (30, 30') is an at least partial side glazing of a vehicle and said second glazed element (20) is a windscreen, in particular a laterally and/or longitudinally curved windscreen.

11. The complex glazing (1) as claimed in the preceding claim, **characterized in that** it comprises at least a second glazed element (20) consisting of a windscreen, in particular a laterally and/or longitudinally curved windscreen, and two first glazed elements (30, 30') each constituting an at least partial side glazing of a vehicle.

12. The complex glazing (1) as claimed in the preceding claim, **characterized in that** it comprises at least a second glazed element (20) consisting of a windscreen, in particular a laterally and/or longitudinally curved windscreen, two first glazed elements (30, 30') each constituting an at least partial side glazing of a vehicle and a first glazed element (10) constituting an at least partial roof element of a vehicle.

13. The complex glazing (1) as claimed in one of claims 10 to 12, **characterized in that** said first glazed element (30, 30') is oriented in the vicinity of the profile (33, 33') at an angle α, α' that is not flat with said second glazed element (20) and is preferably oriented at an angle α, α' close to 120°.

14. The complex glazing (1) as claimed in any one of the preceding claims, **characterized in that** it comprises a seal (17) positioned between the second glazed element (20) and said first glazed element (10, 30, 30'), this seal at least partially overlapping said profile (13, 33, 33').

15. The complex glazing (1) as claimed in any one of the preceding claims, **characterized in that** said rigid profile (13, 33, 33') has an overall width L less than 75 mm, or even less than 50 mm, in particular of the order to 40 to 45 mm, or even less, for example of the order of 30 mm.

16. A first glazed element (10, 30, 30') provided by extrusion, by encapsulation or by gluing in one side (12, 32, 32') with at least a portion of rigid profile (13, 33, 33') protruding beyond an edge (11, 31, 31') for a complex glazing (1) as claimed in any one of the preceding claims.

17. The first glazed element (10, 30, 33') as claimed in the preceding claim, **characterized in that** said profile (13, 33, 33') substantially has the shape of a T or of a Y in cross section, one branch of the T or of the Y being positioned under the side (12, 32, 32') of that first glazed element (10, 30, 33') and the stem of the T or of the Y being positioned adjacent to the edge (11, 31, 31') of that first glazed element.

18. The first glazed element (10) as claimed in the preceding claim, **characterized in that** the angle between the branches of the T is not flat and is preferably less than 170°, or even less than 160°.

19. The first glazed element (30, 30') as claimed in claim 16, **characterized in that** the angle between the branches of the Y is not flat and is preferably close to 120°.

20. The first glazed element (10, 30, 33') as claimed in claim 16, **characterized in that** said profile (13, 33, 33') substantially has the shape of an h in cross section, the parallel branches of the h being positioned under and over the sides of that first glazed element (10, 30, 30').

21. Method of producing complex glazing (1), this glazing consisting of two glazed elements (10, 30, 30'; 20) contiguous along at least a portion of edge (11, 31, 31'; 21) and separated from each other by a space (2, 3, 3'), **characterized in that** a first glazed element (10, 30, 30') is provided on one side (12, 32, 32') with a portion of rigid profile (13, 33, 33') protruding beyond said edge and forming a support for a second glazed element (20), said profile (13, 33, 33') substantially has the shape of a T or of a Y or of an h in cross section and **in that** the second glazed element (20) is then positioned on said profile (13, 33, 33').

22. The method as claimed in the preceding claim, **characterized in that** a first glazed element (10, 30, 30') is positioned before the second glazed element (20) in an assembly jig.

23. The method as claimed in claim 22 or 23, **characterized in that** a first glazed element (10, 30, 30') is positioned before the second glazed element (20) in an opening, in particular a bodywork opening.

24. The method as claimed in any one of claims 21 to 23, **characterized in that** the second glazed element (20) is glued to said profile (13, 33, 33') by a strip of glue (4, 4').

25. The method as claimed in any one of claims 21 to 23, **characterized in that** said portion of rigid profile (13, 33, 33') is manufactured previously by extrusion against said first glazed element (10, 30, 30').

26. The method as claimed in any one of claims 21 to 23, **characterized in that** said portion of rigid profile (13, 33, 33') is manufactured previously by encapsulation against said first glazed element (10, 30, 30').

27. The method as claimed in any one of claims 21 to 23, **characterized in that** said portion of rigid profile (13, 33, 33') is manufactured previously and glued previously to said first glazed element (10, 30, 30') by a strip of glue (5).

## Patentansprüche

1. Mehrteilige Verglasung (1), gebildet aus wenigstens zwei Glaselementen (10, 30, 30'; 20), die an wenigstens einem Kantenabschnitt (11, 31, 31'; 21) aneinander grenzen und durch einen Zwischenraum (2, 3, 3') voneinander getrennt sind, **dadurch gekennzeichnet, dass** ein erstes Glaselement (10, 30, 30') durch Extrudieren, Einkapseln oder Kleben unter einem Rand (12, 32, 32') mit wenigstens einem starren Profilabschnitt (13, 33, 33') versehen ist, der jenseits der genannten Kante vorspringt und eine Anlage für ein zweites Glaselement (20), das mittels eines Klebstoffstrangs (4, 4') an das Profil (13, 33, 33') geklebt ist, ausbildet, und dass das Profil (13, 33, 33') im Querschnitt im Wesentlichen eine T- oder Y- oder h-Form aufweist.

2. Mehrteilige Verglasung (1) nach Anspruch 1, **dadurch gekennzeichnet, dass** die Schenkel des T oder des Y unter den Rändern (12, 22, 32, 32') der Glaselemente (10, 20, 30, 30') positioniert sind und der Stamm des T oder des Y in dem Zwischenraum (2, 3, 3') positioniert ist.

3. Mehrteilige Verglasung (1) nach Anspruch 1 oder Anspruch 2, **dadurch gekennzeichnet, dass** ein Schenkel des T oder des Y dicker als der andere ist, wobei dieser Schenkel unter dem Rand (12, 32, 32') des ersten Glaselements (10, 30, 30') positioniert ist.

4. Mehrteilige Verglasung (1) nach Anspruch 1, **dadurch gekennzeichnet, dass** die parallelen Schenkel des h unter und über den Rändern des ersten Glaselements (10, 30, 30') positioniert sind und der Stamm des h unter dem Rand (22) des zweiten Glaselements (20) positioniert ist.

5. Mehrteilige Verglasung (1) nach einem der vorstehenden Ansprüche, **dadurch gekennzeichnet, dass** das Profil (13, 33, 33') wenigstens teilweise transparent ist.

6. Mehrteilige Verglasung (1) nach einem der vorstehenden Ansprüche, **dadurch gekennzeichnet, dass** das Profil (13, 33, 33') aus Kunststoff oder aus Glas besteht.

7. Mehrteilige Verglasung (1) nach einem der Ansprüche 1 bis 4, **dadurch gekennzeichnet, dass** das Profil (13, 33, 33') aus Metall oder aus Metalllegierung besteht.

8. Mehrteilige Verglasung (1) nach einem der vorstehenden Ansprüche, **dadurch gekennzeichnet, dass** das erste Glaselement (10) ein wenigstens teilweises Element eines Fahrzeugdachs ist und das zweite Glaselement (20) eine Windschutzscheibe, insbesondere eine seitlich und/oder in Längsrichtung gebogene Windschutzscheibe ist.

9. Mehrteilige Verglasung (1) nach dem vorstehenden Anspruch, **dadurch gekennzeichnet, dass** das erste Glaselement (10) im Bereich des Profils (13) unter einem nicht flachen Winkel zu dem zweiten Glaselement (20) ausgerichtet ist und vorzugsweise unter einem Winkel kleiner als 170°, sogar kleiner als 160° ausgerichtet ist.

10. Mehrteilige Verglasung (1) nach einem der Ansprüche 1 bis 7, **dadurch gekennzeichnet, dass** das erste Glaselement (30, 30') ein wenigstens teilweises Element einer Seitenverglasung eines Fahrzeugs ist und das zweite Glaselemente (20) eine Windschutzscheibe, insbesondere eine seitlich und/oder in Längsrichtung gebogene Windschutzscheibe ist.

11. Mehrteilige Verglasung (1) nach dem vorstehenden Anspruch, **dadurch gekennzeichnet, dass** sie wenigstens ein zweites Glaselement (20), das von einer Windschutzscheibe, insbesondere einer seitlich und/oder in Längsrichtung gebogenen Windschutzscheibe gebildet ist, sowie zwei erste Glaselemente (30, 30'), die jeweils ein wenigstens teilweises Element einer Seitenverglasung eines Fahrzeugs bilden, umfasst.

12. Mehrteilige Verglasung (1) nach dem vorstehenden Anspruch, **dadurch gekennzeichnet, dass** sie wenigstens ein zweites Glaselement (20), das von einer Windschutzscheibe, insbesondere einer seitlich und/oder in Längsrichtung gebogenen Windschutzscheibe gebildet ist, zwei erste Glaselemente (30, 30'), die jeweils ein wenigstens teilweises Element einer Seitenverglasung eines Fahrzeugs bilden, sowie ein erstes Glaselement (10), das ein wenigstens teilweises Element eines Fahrzeugdachs bildet, umfasst.

13. Mehrteilige Verglasung (1) nach einem der Ansprüche 10 bis 12, **dadurch gekennzeichnet, dass** das erste Glaselement (30, 30') im Bereich des Profils (33, 33') unter einem nicht flachen Winkel α, α' zu dem zweiten Glaselement (20) ausgerichtet ist und vorzugsweise unter einem Winkel α, α' nahe 120° ausgerichtet ist.

14. Mehrteilige Verglasung (1) nach einem der vorstehenden Ansprüche, **dadurch gekennzeichnet, dass** sie eine Dichtung (17) aufweist, die zwischen dem zweiten Glaselement (20) und dem ersten Glaselement (10, 30, 30') angeordnet ist, wobei diese Dichtung das Profil (13, 33, 33') wenigstens teilweise bedeckt.

15. Mehrteilige Verglasung (1) nach einem der vorstehenden Ansprüche, **dadurch gekennzeichnet, dass** das starre Profil (13, 33, 33') eine Gesamtbreite L von weniger als 75 mm, sogar weniger als 50 mm, insbesondere in der Größenordnung von 40 bis 45 mm, sogar darunter, beispielsweise in der Größenordnung von 30 mm aufweist.

16. Erstes Glaselement (10, 30, 30') das durch Extrudieren, Einkapseln oder Kleben an einem Rand (12, 32, 33') mit wenigstens einem starren Profilabschnitt (13, 33, 33'), der jenseits einer Kante (11, 31, 31') vorspringt, versehen ist, für eine mehrteilige Verglasung (1) nach einem der vorstehenden Ansprüche.

17. Erstes Glaselement (10, 30, 30') nach dem vorstehenden Anspruch, **dadurch gekennzeichnet, dass** das Profil (13, 33, 33') im Querschnitt im Wesentlichen eine T- oder Y-Form aufweist, wobei ein Schenkel des T oder des Y unter dem Rand (12, 32, 32`) dieses ersten Glaselements (10, 30, 30`) positioniert ist und der Stamm des T oder des Y benachbart zu der Kante (11, 31, 31') dieses ersten Glaselements positioniert ist.

18. Erstes Glaselement (10) nach dem vorstehenden Anspruch, **dadurch gekennzeichnet, dass** der Winkel zwischen den Schenkeln des T nicht flach ist und vorzugsweise kleiner als 170°, sogar kleiner als 160° ist.

19. Erstes Glaselement (30, 30') nach Anspruch 16, **dadurch gekennzeichnet, dass** der Winkel zwischen den Schenkeln des Y nicht flach ist und vorzugsweise nahe 120° beträgt.

20. Erstes Glaselement (10, 30, 30') nach Anspruch 16, **dadurch gekennzeichnet, dass** das Profil (13, 33, 33') im Querschnitt im Wesentlichen eine h-Form aufweist, wobei die parallelen Schenkel des h unter und über den Rändern dieses ersten Glaselements (10, 30, 30') positioniert sind.

21. Verfahren zur Herstellung einer mehrteiligen Verglasung (1), wobei diese Verglasung aus wenigstens zwei Glaselementen (10, 30, 30'; 20) besteht, die an wenigstens einem Kantenabschnitt (11, 31, 31'; 21) aneinander grenzen und durch einen Zwischenraum (2, 3, 3') voneinander getrennt sind, **dadurch gekennzeichnet, dass** ein erstes Glaselement (10, 30, 30') an einem Rand (12, 32, 32') mit einem starren Profilabschnitt (13, 33, 33') versehen ist, der jenseits der genannten Kante vorspringt und eine Anlage für ein zweites Glaselement (20) ausbildet, das Profil (13, 33, 33') im Querschnitt im Wesentlichen eine T- oder Y- oder h-Form aufweist und dass anschließend das zweite Glaselement (20) an dem Profil (13, 33, 33') angeordnet wird.

22. Verfahren nach dem vorstehenden Anspruch, **dadurch gekennzeichnet, dass** ein erstes Glaselement (10, 30, 30') vor dem zweiten Glaselement (20) in einer Montageschablone angeordnet wird.

23. Verfahren nach Anspruch 21 oder 22, **dadurch gekennzeichnet, dass** ein erstes Glaselement (10, 30, 30') vor dem zweiten Glaselement (20) in einer Öffnung, insbesondere einer Karosserieöffnung angeordnet wird.

24. Verfahren nach einem der Ansprüche 21 bis 23, **dadurch gekennzeichnet, dass** das zweite Glaselement (20) mittels eines Klebstoffstrangs (4, 4') an das Profil (13, 33, 33') geklebt wird.

25. Verfahren nach einem der Ansprüche 21 bis 23, **dadurch gekennzeichnet, dass** der starre Profilabschnitt (13, 33, 33') vorher durch Extrudieren an das erste Glaselement (10, 30, 30') hergestellt wird.

26. Verfahren nach einem der Ansprüche 21 bis 23, **dadurch gekennzeichnet, dass** der starre Profilabschnitt (13, 33, 33') vorher durch Einkapseln an dem ersten Glaselement (10, 30, 30') hergestellt wird.

27. Verfahren nach einem der Ansprüche 21 bis 23, **dadurch gekennzeichnet, dass** der starre Profilabschnitt (13, 33, 33') vorgefertigt wird und vorher mittels eines Klebstoffstrangs (5) an das erste Glaselement (10, 30, 30') geklebt wird.
